# EUROPÄISCHE PATENTSCHRIFT

(11) **EP 1 923 203 B1**
(45) Veröffentlichungstag und Bekanntmachung des Hinweises auf die Patenterteilung: **31.03.2010**
(21) Anmeldenummer: 07019006.1
(22) Anmeldetag: 27.09.2007
(51) Int. Cl.: B29C 65/10, E04D 15/04

(54) **Schweißwagen**
Welding cart
Wagon de soudure

(30) Priorität: 15.11.2006 DE 102006053735
(43) Veröffentlichungstag der Anmeldung: 21.05.2008
(73) Patentinhaber: Steinel GmbH, 33442 Herzebrock (DE)
(72) Erfinder: Dugan, Steve, Minneapolis Minnesota 55404 (US)
(74) Vertreter: Behrmann, Niels

(56) Entgegenhaltungen:
- DE-U1- 8 805 849
- DE-U1- 29 608 593

## Beschreibung

Die Erfindung betrifft einen Schweißwagen zum Verschweißen von zwei überlappenden Materialbahnen gemäß dem Oberbegriff des Anspruchs 1.

Derartige Schweißwagen sind allgemein bekannt und werden bevorzugt zum Verschweißen von in Querrichtung überlappenden Kunststofffolien zur Abdichtung von Dächern eingesetzt. Auf diese spezielle Anwendung sind die bekannten Schweißwagen jedoch nicht beschränkt. Sie eigenen sich zuden beispielsweise zum Verschweißen von Lastwagenplanen, Zelten, Abdeckungen für die Landwirtschaft, Schwimmbadfolien, Markisen, Bootsplanen, Werbeplanen, Fußbodenbelägen, etc. Wesentlich ist, dass die zu verschweißenden Materialbahnen überlappend angeordnet sind, so dass eine Schweißdüse einer auf dem Schweißwagen angeordneten Schweißeinrichtung zwischen den Materialbahnen platziert werden kann, um die sich überlappenden Materialbahnabschnitte beim Verfahren des Schweißwagens zu erhitzen und somit zu verschweißen. Bei bekannten Schweißwagen ist der Schweißdüse in der Regel in Schweißrichtung eine Andrückeinrichtung zur Druckbeaufschlagung der oberen Materialbahn nach dem Schweißvorgang nachgeordnet, so dass die obere Materialbahn beim Verfahren des Schweißwagens nach dem Erhitzen druckbeaufschlagt wird, wodurch eine innige Verbindung zwischen den angeschmolzenen Materialbahnen entsteht.

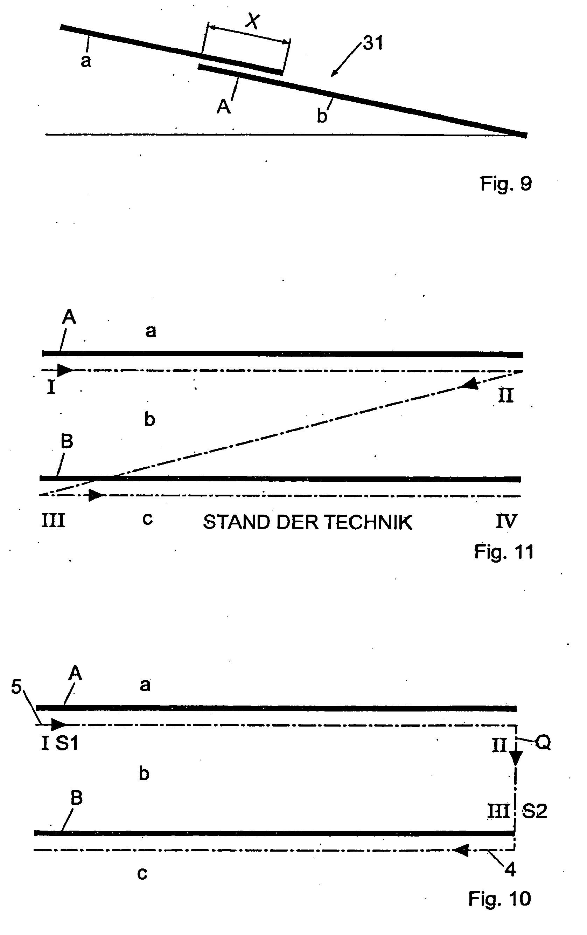

Ein derartiger Schweißwagen ist beispielsweise aus der EP 1 371 474 B1 bekannt. Nachteilig bei dem bekannten Schweißwagen ist, dass dieser lediglich in eine Schweißrichtung (Betriebsrichtung) betrieben werden kann. Beim Verschweißen von sich überlappenden Materialbahnen muss dabei wie in Fig. 11 gezeigt, vorgegangen werden. In Fig. 11 sind zwei in Querrichtung voneinander beabstandete sich in Längsrichtung erstreckende Überlappungsabschnitte A und B gezeigt, wobei im Überlappungsabschnitt A eine erste Materialbahn a eine benachbarte zweite parallele Materialbahn b in Querrichtung überlappt und in dem Überlappungsabschnitt B die zweite Materialbahn b eine benachbarte dritte parallele Materialbahn c überlappt. In Position I wird zunächst die Schweißdüse eines Schweißwagens im Überlappungsabschnitt A zwischen den Materialbahnen a und b positioniert und danach entlang der gestrichelten Linie bis zur Position II in eine erste Längsrichtung verschoben. Bei dem Verfahren des Schweißwagens von der Position I zu der Position II werden die angeschmolzenen Schweißbahnen von einer in der ersten Fahrtrichtung hinter der Schweißdüse angeordneten Andrückeinrichtung aneinander gepresst. In Position II wird die Schweißdüse aus dem Überlappungsabschnitt A herausverfahren und danach wird der gesamte Schweißwagen entgegen der ersten Fahrtrichtung (einzig mögliche Betriebsrichtung) in eine zweite Fahrtrichtung sowie quer dazu entlang der gestrichelten Linie von der Position II zu der Position III transportiert, wobei während dieses Transportvorgangs kein Verschweißen erfolgt. Die Position III liegt in Querrichtung beabstandet zu der Startposition I. In Position III wird die Schweißdüse zwischen den Materialbahnen b und c im Überlappungsabschnitt B positioniert und der Schweißwagen wird in Pfeilrichtung entlang der gestrichelten Linie wieder in die erste Längsrichtung zur Position IV verschoben, wobei hierbei die Materialbahnen b und c miteinander verschweißt werden. Zum miteinander Verschweißen weiterer paralleler Materialbahnen, muss der Schweißwagen nun wieder entgegen der Schweißrichtung (erste Längsrichtung) sowie in Querrichtung dazu transportiert werden. Durch den insbesondere bei großen Dächern teilweise sehr langen Transportschritt (II - III) nach dem Verschweißen zweier Materialbahnen wird ein erheblicher Anteil von zur Verfügung stehender Arbeitszeit nicht produktiv genutzt, da während der Überbrückung des langen Transportweges keine Schweißarbeit verrichtet werden kann.

Weitere Beispiele von bekannten Schweißwagen sind in der CH 4,65197, der DE 3537244 A1, der DE 423088 C2, der DE 9110487 U1, der DE 9110488 U1, der DE 100 32 450 A1, der DE 198 136 25 C1, der EP 300 209 A2, der EP 949 057 B1, der EP 1464471 B1, der US 3080910, der US 4440588 und der US 5865942 beschrieben.

Aus der G 88 05 849.2 ist eine Vorrichtung mit den Merkmalen des Oberbegriffs des Hauptanspruchs bekannt; ein weiteres, verfahrbares Nahtschweißgerät ist aus der DE 296 08 593 bekannt. Beide Druckschriften offenbaren insbesondere auch ein Verfahren zum Verschweißen mehrerer in Längsrichtung parallel zueinander verlaufender Materialbahnen (a, b, c) mit einem Schweißwagen (1), wobei die Schritte des Positionierens, Transportierens und erneuten Positionierens gemäß unabhängigem Verfahrensanspruch 12 auch als bekannt vorausgesetzt werden.

Der Erfindung liegt die Aufgabe zugrunde, einen Schweißwagen vorzuschlagen, mit dem mehrere nebeneinander angeordnete, sich überlappende Materialbahnen effektiv und schnell miteinander verschweißbar sind. Ferner soll ein Verfahren vorgeschlagen werden, mit dem benachbarte Materialbahnen in kürzester Zeit unter Einsatz eines Schweißwagens miteinander verschweißbar sind.

Diese Aufgabe wird mit einem Schweißwagen mit den Merkmalen des Anspruchs 1 sowie mit einem Verfahren mit dem Merkmalen des Anspruchs 12 gelöst. Weiterbildungen der Erfindung sind in den Unteransprüchen angegeben.

Der Erfindung liegt der Gedanke zugrunde, den Schweißwagen derart auszubilden, dass er in beide einander entgegensetzte Fahrtrichtungen betreibbar, d.h. verschweißend einsetzbar ist. Es wurde erkannt, dass es für den Einsatz des Schweißwagens in beide Fahrtrichtungen notwendig ist, dass unabhängig von der gewählten Fahrtrichtung, in der der Schweißwagen betrieben werden soll, sichergestellt ist, dass die obere Materialbahn nach dem Verschweißvorgang gegen die untere Materialbahn gepresst wird, um eine innige Verbindung der angeschmolzenen Materialbahnen herzustellen. Hierzu schlägt die Erfindung vor, dass in beiden Fahrtrichtungen die Schweißdüse vor der Andrückeinrichtung angeordnet, oder anordnenbar ist, beispielsweise durch eine Relativbewegung zwischen der Schweißdüse und der Andrückeinrichtung. Durch die erfindungsgemäße Ausbildung des Schweißwagens kann die zur Verfügung stehende Arbeitszeit effektiv genutzt werden, da der Schweißwagen - entgegen dem Stand der Technik - nach dem Verfahren in eine erste Fahrtrichtung nicht zunächst entgegen dieser Fahrtrichtung in eine zweite Fahrtrichtung transportiert werden muss, ohne verschweißend einsetzbar zu sein, sondern dass der Schweißwagen sowohl auf dem Hinweg als auch auf dem Rückweg betrieben werden kann. Hierdurch kann ungefähr 40 % Totzeit eingespart werden. Der Schweißwagen muss lediglich nach dem Verfahren in eine erste Längsrichtung unmittelbar in Querrichtung zu einem benachbartem Überlappungsabschnitt zweier Materialbahnen transportiert werden und kann dann entgegen der ersten Fahrtrichtung in die zweite Fahrtrichtung Materialbahnen verschweißend betrieben werden. Bei der zum Einsatz kommenden Schweißeinrichtung handelt es sich bevorzugt um ein Heißluftgebläse, wobei die erhitzte Luft durch die Schweißdüse hindurch zwischen die sich überlappenden Materialbahnen geleitet wird. Das Heißluftgebläse ist bevorzugt, jedoch nicht notwendigerweise, elektrisch betreibbar.

In Ausgestaltung der Erfindung ist mit Vorteil vorgesehen, dass die Schweißdüse zwischen zwei Schweißpositionen relativ zu der Andrückeinrichtung verstellbar ist, wobei die beiden Schweißpositionen auf in den Fahrtrichtungen gegenüberliegenden Seiten der Andrückeinrichtung angeordnet sind. Dabei ist die Schweißdüse immer derart anzuordnen, dass sie sich in der Fahrtrichtung, in der der Schweißwagen betrieben werden soll, vor der Andrückeinrichtung befindet, um ein Verpressen der überlappenden Materialbahnen nach dem Erhitzen zu gewährleisten. Denkbar ist es auch, die Schweißdüse positionsfest anzuordnen und die Andrückeinrichtung zwischen zwei auf gegenüberliegenden Seiten der Schweißdüse liegenden Andrückpositionen zu verstellen.

Mit Vorteil ist die Schweißdüse in eine von den Materialbahnen abgehobene Neutral-Position verstellbar, um den Schweißwagen bei einem Transport in Querrichtung zwischen zwei benachbarten Überlappungsabschnitten störungsfrei transportieren zu können. In der Neutral-Position kann die Schweißdüse nach dem Einschalten der Schweißeinrichtung vorzugsweise so lange verbleiben, bis die austretende Heißluft die gewünschte Temperatur erreicht hat. Ferner kann die Schweißdüse in der angehobenen Neutral-Position aufgrund der verbesserten Zugänglichkeit gut gereinigt werden. Bevorzugt ist die Schweißdüse aufgrund einer verbesserten Reinigbarkeit aus Edelstahl ausgebildet und weist eine Vielzahl von Luftaustrittsöffnungen auf.

In Weiterbildung der Erfindung ist mit Vorteil ein Verstellmechanismus zum Verstellen der Schweißdüse zwischen den beiden voneinander beabstandeten Schweißpositionen vorgesehen. Bevorzugt ist der Verstellmechanismus derart ausgebildet, dass er auch ein Verstellen der Schweißdüse in die zuvor beschriebenen Neutral-Position ermöglicht. Der Verstellmechanismus ist mit Vorteil derart ausgebildet, dass er ein Verstellen der Schweißdüse, vorzugsweise zusammen mit der Schweißeinrichtung quer zu den Fahrtrichtungen sowie parallel zu den Fahrtrichtungen ermöglicht. Ferner sollte der Verstellmechanismus derart beschaffen sein, dass die Schweißdüse um eine in den Fahrtrichtungen verlaufende Achse verschwenkbar ist, um die Schweißdüse von einer unteren Arbeitsposition in eine angehobene Position (Neutral-Position) verstellen zu können. Das Verschwenken ist ferner von Vorteil, um eine ggf. zwischen den Schweißpositionen angeordnete Achse oder Welle beim Verschieben in eine der Fahrtrichtungen überwinden zu können. Soll die Schweißdüse von einer ersten Schweißposition in eine zweite Schweißposition verstellt werden, wird die Schweißdüse zunächst orthogonal zur Schweißrichtung, also aus dem Überlappungsabschnitt heraus bewegt. Daraufhin erfolgt ein Verschwenken um die genannte Achse in die angehobene Neutral-Position. Nach dem Verschwenkungsschritt wird die Schweißdüse, vorzugsweise zusammen mit der Schweißeinrichtung, parallel zu den Fahrtrichtungen verschoben und wieder nach unten verschwenkt. Daraufhin wird die Schweißdüse quer zu den Fahrtrichtungen in den Überlappungsabschnitt hinein, also in die zweite Schweißposition, verschoben, wodurch der Schweißwagen nun in eine andere Fahrtrichtung betrieben werden kann. Zur Erleichterung der Bedienbarkeit kann ein automatischer Verstellantrieb vorgesehen werden.

Auf eine Relativbeweglichkeit zwischen Schweißdüse und Andrückeinrichtung in die Fahrtrichtungen kann verzichtet werden, wenn die Schweißdüse zwischen zwei in den Fahrtrichtungen voneinander beabstandeten Andrückeinrichtungen angeordnet bzw. anordnenbar ist. Bei einer derartigen Konstruktion hat immer nur die jeweils nachlaufende Andrückeinrichtung eine Andrückfunktion für den soeben verschweißten Bereich. Die in Fahrtrichtung vorlaufende Andrückeinrichtung presst lediglich zwei noch nicht erhitzte Materialbahnabschnitte gegeneinander.

Vorzugsweise umfasst die Andrückeinrichtung mindestens eine auf der oberen Materialbahn abrollende Andrückwalze. Über die Andrückwalze wird ein Anpressdruck auf die obere Materialbahn nach dem Verschweißvorgang ausgeübt. Vorzugsweise sind die Bauteile des Schweißvorgangs derart angeordnet, dass der Schwerpunkt des Schweißvorgangs im Bereich der Andrückwalze liegt.

Mit Vorteil dient die Andrückwalze gleichzeitig als Antriebswalze, die mit einem Antriebsmotor wirkverbunden ist.

Mit Vorteil sitzt die Andrückwalze auf einer Welle, auf der beabstandet zu der Andrückwalze drehfest ein Laufrad (beispielsweise Laufwalze) angeordnet ist. Es ist beispielsweise möglich, den Antriebsmotor entweder unmittelbar auf der Welle anzuordnen oder den Antriebsmotor über eine Kupplungs- und/oder Getriebevorrichtung mit der Welle zu koppeln.

Vorzugsweise ist der Schweißwagen derart ausgebildet, dass der Schweißwagen während des Betriebs ausschließlich auf drei Rädern (inklusive Walzen) auf den Materialbahnen verfahrbar ist. Dadurch, dass der Schweißwagen nur auf drei Rädern aufliegt, können Unebenheiten des Untergrundes optimal ausgeglichen werden (Dreipunktlagerung). Vorzugsweise ist der Schweißwagen hierzu als eine Art Wippe ausgebildet, was bedeutet, dass der Schweißwagen in einer exakt waagerechten Position nur mit zwei auf einer Welle angeordneten Rädern (Andrückwalze und Laufrad) auf den Materialbahnen aufsteht. Rechts und links neben der Welle ist in der jeweiligen Fahrtrichtung jeweils ein Stützrad angeordnet, wobei in Betriebsposition immer nur ein Stützrad zusammen mit den auf der Welle angeordneten Rädern zum Einsatz kommt. Durch Verschieben der Schweißdüse, vorzugsweise zusammen mit der Schweißeinrichtung, wird der Schwerpunkt des Schweißwagens derart verlagert, dass entweder das eine oder das andere Stützrad auf den Materialbahnen aufliegt.

In Ausgestaltung der Erfindung ist mit Vorteil vorgesehen, dass der Schweißwagen mit Sensoren zur Messung der Temperatur im Schweißbereich und/oder der Heißlufttemperatur und/oder der Umgebungstemperatur ausgestattet ist. Die Messergebnisse werden bevorzugt auf einer Anzeigeeinrichtung dargestellt, um die Bedienperson zu jeder Zeit über die Schweißparameter zu informieren. Bevorzugt ist auf der Anzeigeeinrichtung auch die tatsächliche und/oder gewählte Verfahrgeschwindigkeit des Schweißvorgangs anzeigbar.

In Weiterbildung der Erfindung ist der Schweißwagen mit einer Führungs- bzw. Orientierungseinrichtung versehen, die ein gerades Verfahren des Schweißwagens entlang eines Überlappungsabschnitts ermöglicht. Als Führungseinrichtung kann beispielsweise ein Führungsrad vorgesehen werden, welches entlang der Überlappungskante zweier überlappender Materialbahnen verfährt. Alternativ oder zusätzlich hierzu kann ein Laser eingesetzt werden, mit dem ein beabstandeter Festpunkt anvisiert das Lenken des Schweißvorgangs vorzugsweise durch Ziehen oder Drücken an einem entsprechenden Halterahmen bzw. Handgriff.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigt in
- Fig. 1:: eine perspektivische Darstellung eines Schweißwagens mit zwischen zwei Schweißpositionen verstellbarer Schweißdüse,
- Fig. 2: eine Ansicht eines Schweißwagens von unten, wobei die Schweißdüse in einer ersten Schweißposition angeordnet ist,
- Fig. 3: eine Ansicht des Schweißwagens gem. Fig. 2 in Fahrtrichtung blickend,
- Fig. 4: eine Ansicht des Schweißwagens gem. den Fig. 2 und 3 in einer Seitenansicht,
- Fig. 5: eine Draufsicht auf einen Schweißwagen mit aus der ersten Schweißposition zurückgezogener Schweißdüse,
- Fig. 6: eine Ansicht eines Schweißwagens in Fahrtrichtung, wobei die Schweißdüse mit Schweißeinrichtung in einer angehobenen Neutral-Position verschwenkt ist,
- Fig. 7: eine Ansicht eines Schweißwagens von unten, wobei die Schweißdüse sich in einer von der ersten Schweißposition beabstandeten zweiten Schweißposition befindet,
- Fig. 8a: eine schematische Darstellung beider Schweißpositionen relativ zu einer Andrück-Einrichtung,
- Fig. 8b: eine schematische Darstellung einer zwischen zwei Andrück-Einrichtungen angeordnete Schweißdüse,
- Fig. 9: einen Ausschnitt eines Daches mit zwei benachbarten, sich in Querrichtung überlappenden Materialbahnen,
- Fig. 10: ein Ablaufschema für das Verschweißen mehrerer paralleler Materialbahnen mit einem erfindungsgemäßen Schweißwagen und
- Fig. 11: ein Ablaufschema für das Verschweißen mehrerer paralleler Materialbahnen mit einem Schweißwagen nach dem Stand der Technik.

In den Figuren sind gleiche Bauteile und Bauteile mit der gleichen Funktion mit den gleichen Bezugszeichen gekennzeichnet.

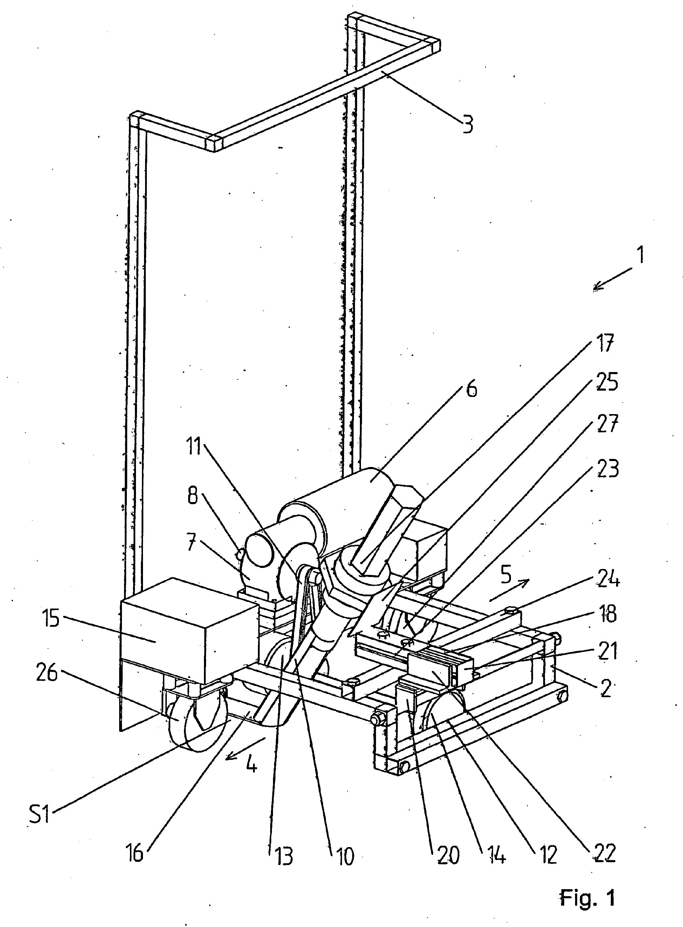

In Fig. 1 ist ein Schweißwagen 1 in einer perspektivischen Ansicht gezeigt. Der Schweißwagen 1 weist ein Rahmengestell 2 auf, dass zur Halterung sämtlicher funktionalen Bauteile dient. Am Rahmengestell 2 ist ein Haltegriff 3 zum Führen bzw. Lenken des Schweißwagens 1 während des Schweiß- oder Transportvorgangs angeordnet.

Der Schweißwagen 1 ist in eine erste Fahrtrichtung 4 und in eine der ersten Fahrtrichtung 4 entgegengesetzte zweite Fahrtrichtung 5 verfahrbar. Hierzu ist der Schweißwagen 1 mit einem elektrischen Antriebsmotor 6 ausgerüstet, dessen Motorwelle mit einem Schneckenrad 7 kämmt. Das Schneckenrad 7 ist wiederum drehfest mit einer Getriebewelle 8 verbunden, auf der drehfest ein einer Zahnscheibe 9 sitzt. Die Zahnscheibe 9 ist mit einer Zahnscheibe 10 über einen Antriebsriemen kraftübertragend verbunden. Die Zahnscheibe 10 sitzt drehfest auf einer quer zu den Fahrtrichtungen 4, 5 angeordneten Welle 12, die am Rahmengestell 12 drehbar gelagert ist. Auf der Welle 12 sitzt drehfest eine Andrückwalze 13 (Andrückeinrichtung) und davon beabstandet ein Laufrad 14. Über den Antriebsmotor 6, das Schneckenrad 7, die Zahnscheibe 9, den Antriebsriemen 11, die Zahnscheibe 10 und die Welle 12 werden die Andrückwalze 13 und das Laufrad 14 in die eine oder andere Fahrtrichtung 4, 5 drehend angetrieben, abhängig von der Drehrichtung des Antriebsmotors 6. Mittels einer Steuereinrichtung 15 lässt sich die Drehrichtung des Antriebsmotors 6 umkehren.

In der ersten Fahrtrichtung 4 ist vor der Andrückwalze 13 in einer ersten Schweißposition S1 eine Schweißdüse 16 aus Edelstahl angeordnet. Über die Schweißdüse 16 wird Heißluft aus einer mit der Schweißdüse 16 verbundenen, als Heißluftgebläse ausgebildeten Schweißeinrichtung 17 zwischen zwei überlappende Materialbahnen eingeblasen, die hierdurch angeschmolzen werden. Hierzu weist die Schweißdüse mehrere nicht gezeigte Löcher auf, durch die die Heißluft austreten kann. Bei dem Verfahren des Schweißwagens 1 in die erste Fahrtrichtung 4 werden die erhitzten Materialbahnen mittels der auf der oberen Materialbahn abrollenden Andrückwalze 13 aneinander gepresst, wodurch die Materialbahnen eine innige Verbindung zueinander eingehen.

Damit der Schweißwagen 1 in die zweite Fahrtrichtung 5 verschweißend betreibbar ist, muss die Schweißdüse 16 aus der dargestellten ersten Schweißposition S1 in eine zweite Schweißposition S2 (in Fig. 1 nicht gezeigt) transferiert werden, die auf der gegenüberliegenden Seite der Andrückwalze 13 angeordnet ist.

Zum Verstellen der Schweißdüse, zusammen mit der Schweißeinrichtung 17, die wie der Antriebsmotor 7 über die Steuereinrichtung 15 ansteuerbar ist, ist ein Verstellmechanismus 18 vorgesehen. Der Verstellmechanismus 18 umfasst eine parallel zu den Fahrtrichtungen 4, 5 angeordnete starre Achse 19, die am Rahmengestell 2 fixiert ist. Auf der Achse 19 ist ein entlang der Achse 19 verschiebbarer Schlitten 20 verschiebbar gelagert. Der Schlitten 20 ist nicht nur entlang der Achse 19 längsverschieblich, sondern auch um die Achse 19 verschwenkbar. Relativ zu dem Schlitten 20 in Querrichtung verschiebbar ist ein Querprofil 21 angeordnet, welches in einem Führungsabschnitt 22 des Schlittens gehalten und geführt ist. Hierzu greift der Führungsabschnitt 22 in zwei gegenüberliegende, entlang des Querprofils 21 verlaufende Nuten 23 ein. In der dargestellten Position stützt sich das Querprofil 21 auf einem Längsholm 24 mit quadratischem Querschnitt ab, der parallel zu sowie auf Höhe der Achse 19 angeordnet ist. Hierdurch wird der maximale Schwenkwinkel des Querprofils 21 begrenzt. An dem Querprofil 21 ist winklig eine Halteplatte 25 fixiert, an welcher wiederum die Schweißeinrichtung 17 mit Schweißdüse 16 festgelegt ist.

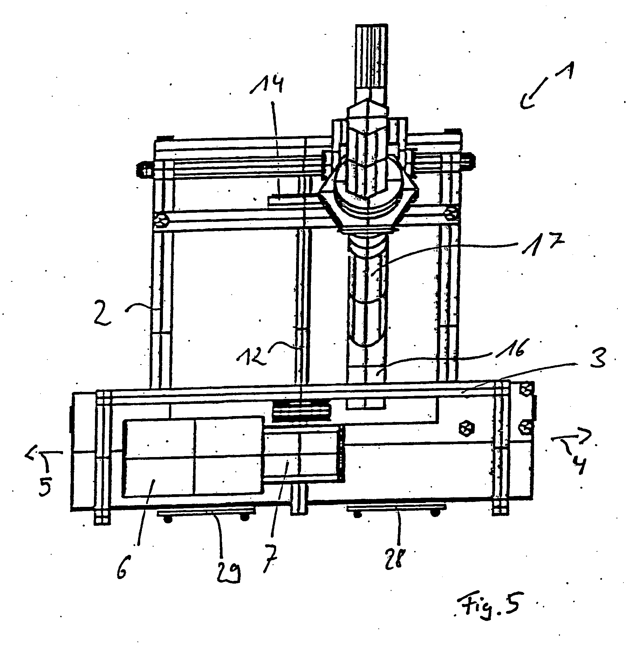

Um nun die Schweißdüse 16 aus der ersten Schweißposition S1 in die Schweißposition S2 zu bewegen, wird zunächst das Querprofil 21 in Richtung von dem Antriebsmotor 6 weg relativ zu dem Schlitten 20 verschoben, wodurch die Schweißdüse 16 aus einem nicht dargestellten Überlappungsabschnitt herausgezogen wird (vgl. Fig. 5).

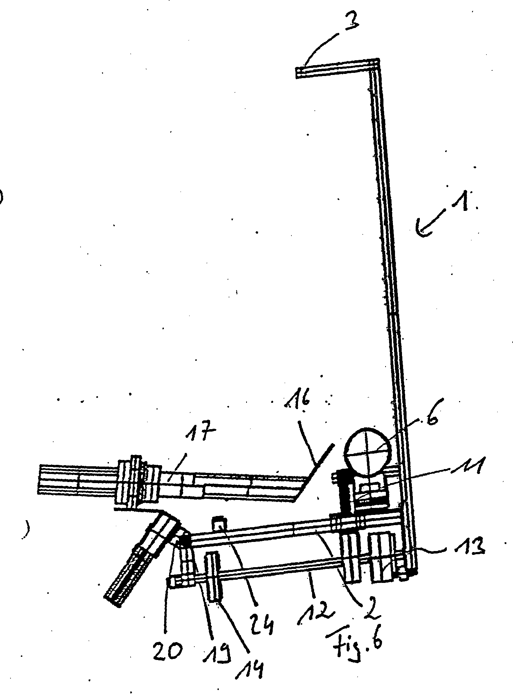

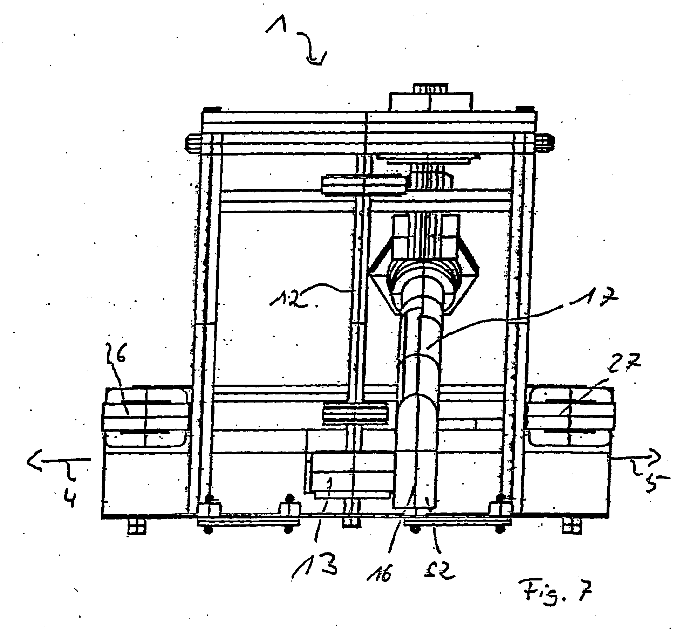

Daraufhin erfolgt ein Verschwenken des Querprofils 21 zusammen mit dem Schlitten 20 um die Achse 19 in Richtung von dem Längsholm 24 weg in eine in Fig. 6 gezeigte Neutral-Position. Daraufhin wird der Schlitten 20 zusammen mit dem Querprofil 21 und der daran festgelegten Schweißeinrichtung 17 mit Schweißdüse 16 in die zweite Fahrtrichtung 5 verschoben und dann mittels des Schlittens 20 um die Achse 19 verschwenkt, bis das Querprofil 21 wieder auf dem Längsholm 24 aufliegt. Daraufhin wird das Querprofil 21 zusammen mit der Schweißeinrichtung 17 und der Schweißdüse 16 in Richtung Antriebsmotor 6 in die in Fig. 7 gezeigte zweite Schweißposition S2 verstellt.

In Fig. 1 ist zu erkennen, dass mit Abstand in jeder-Fahrtrichtung 4, 5 zu der Andrückwalze 13 jeweils ein Stützrad 26, 27 angeordnet ist, von denen jeweils immer nur ein Stützrad 26, 27 Materialbahnkontakt hat, so dass der Schweißwagen 1 im Betrieb immer nur auf der Andrückwalze, dem Laufrad 14 und einem der Stützräder 26, 27 abgestützt ist. In der in Fig. 1 dargestellten Position der Schweißdüse 16 ist nur das Stützrad 26 und nicht das Stützrad 27 in Materialbahnkontakt. Durch das zuvor beschriebene Verstellen der Schweißeinrichtung 17 verlagert sich der Schwerpunkt des Schweißwagens 1, wodurch der Schweißwagen 1 um die Welle 12 in die zweite Fahrtrichtung 5 verkippt, so dass dann nur das Stützrad 27 zusammen mit der Andrückwalze 13 und dem Laufrad 14 Materialbahnkontakt hat.

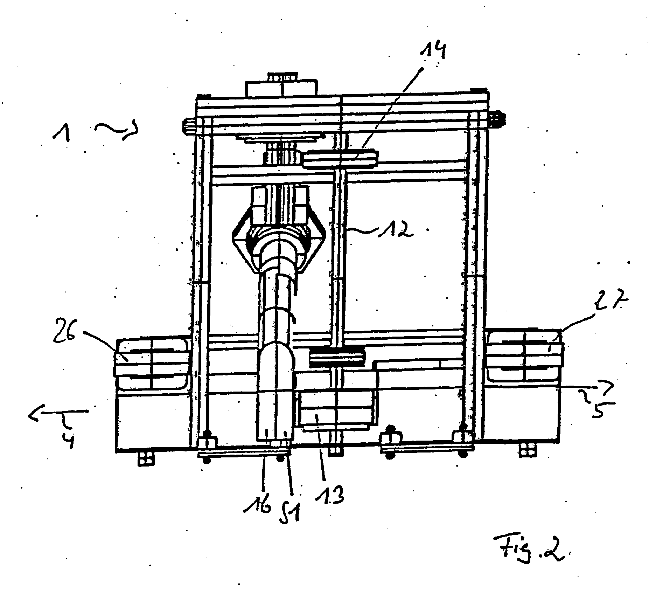

In Folgendem wird anhand der schematischen Fig. 2 bis 7 unterschiedliche Positionen der Schweißdüse 16 näher erläutert.

In Fig. 2 ist der Schweißwagen 1 in einer Ansicht von unten dargestellt. Zu erkennen ist die Welle 12 mit Laufrad 14 und Andrückwalze 13. In der Zeichnungsebene links von der Andrückwalze 13 ist die Schweißdüse 16 in der ersten Schweißposition S1 angeordnet. In der gezeigten Position liegt der Schweißwagen 1 mit der Andrückwalze, dem Laufrad 14 und dem Stützrad 26 auf einer nicht gezeigten Materialbahn auf.

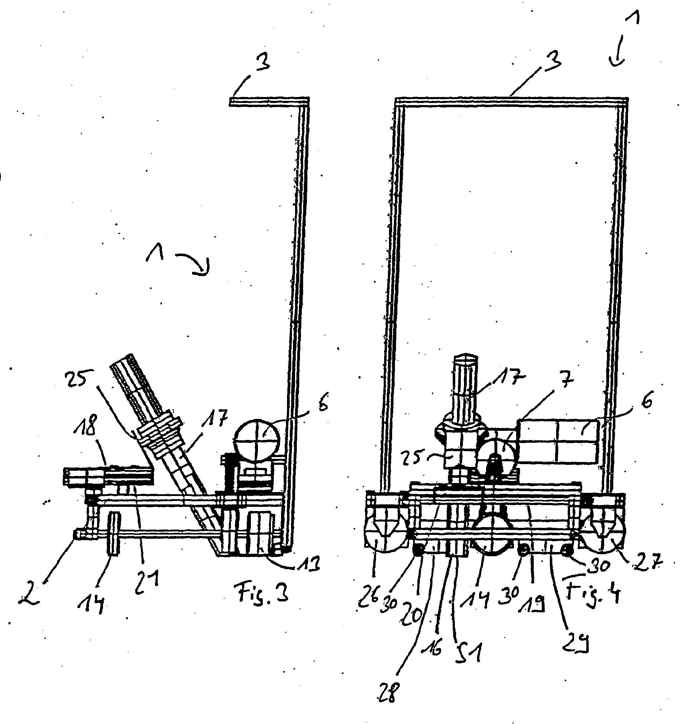

In Fig. 3 ist eine Ansicht des Schweißwagens 1 gem. Fig. 2 in die erste Fahrtrichtung 4 blickend dargestellt. Zu erkennen ist die Verstelleinrichtung 18 zum Verstellen der Schweißeinrichtung 17. Die Schweißeinrichtung 17 ist an der Halteplatte 25 festgelegt, welche winklig an dem Querprofil 21 befestigt ist.

Fig. 4 zeigt den Schweißwagen 1 in einer Seitenansicht. Zu erkennen sind zu beiden Seiten der Andrückwalze 13 angeordnete Luftstrombegrenzungseinrichtungen 28, 29. Jede Luftstrombegrenzungseinrichtung 28, 29 weist zwei voneinander beabstandete Walzen 30 auf, die entlang des hinteren Bereichs der zu erzeugenden Schweißnaht verfahren und somit die obere Materialbahn zur engen Anlage an die darunter liegende Bahn zwingen, wodurch ein Luftaustritt über den Überlappungsbereich hinaus unter die Materialbahnen vermieden, zumindest jedoch reduziert wird.

In Fig. 5 ist eine Ansicht des Schweißwagens 1 von oben gezeigt. Die Schweißdüse 16 befindet sich in einer von der ersten Schweißposition S1 zurückgezogenen Position. Diese Position wurde durch Verstellen des Querprofils 21 (vgl. Fig. 1) in Richtung von dem Antriebsmotor 6 weg erreicht.

In Fig. 6 ist eine Ansicht des Schweißwagens 1 in Fahrtrichtung blickend dargestellt, wobei der Schlitten 20 um die Achse 19 verschwenkt ist, so dass die Schweißdüse 16 in einer angehobenen Neutral-Position befindet, in der beispielsweise die Schweißdüse 16 gereinigt werden kann bzw. in der die Schweißeinrichtung 17 angeschaltet und betrieben werden kann, bis ausreichend heiße Luft aus der Schweißdüse 16 ausströmt. Ferner kann der Schweißvorgang in dieser Position optimal zwischen benachbarten Überlappungsabschnitten transportiert werden.

In Fig. 7 befindet sich die Schweißdüse 16 in der zweiten Schweißposition S2, welche von der Schweißposition S1 in der zweiten Fahrtrichtung 5 versetzt ist, so dass nun in der zweiten Fahrtrichtung 5 verschweißt werden kann.

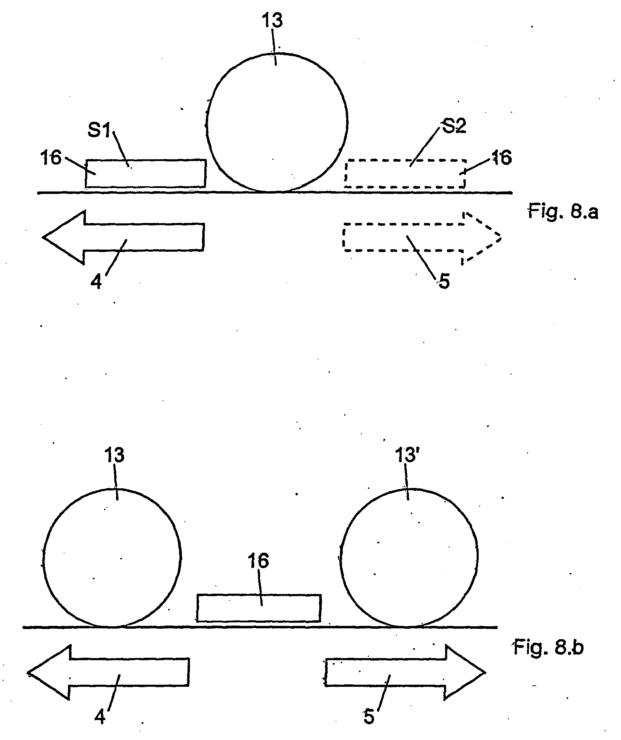

In Fig. 8a sind schematisch die beiden Schweißpositionen S1 und S2 dargestellt, zwischen denen die Schweißdüse 16 verstellbar ist. Die beiden Schweißpositionen S1 und S2 befinden sich auf gegenüberliegenden Seiten der Andrückwalze 13.

In Fig. 8b ist eine schematische Darstellung eines weiteren Ausführungsbeispiels gezeigt, bei dem die Schweißdüse 16 nicht zwischen zwei Schweißpositionen verstellbar ist. Vielmehr sind zwei Andrückwalzen 13 und 13' zu beiden Seiten der Schweißdüse 16 angeordnet, so dass der Schweißwagen in beide Fahrtrichtungen 4, 5 betrieben werden kann.

In Fig. 9 ist schematisch ein Überlappungsabschnitt A von zwei benachbarten Materialbahnen a und b dargestellt. Der Überlappungsabschnitt A ist durch Überlappung der Materialbahn b durch die Materialbahn a in Querrichtung gebildet. Der Überlappungsabschnitt A hat eine breite x von 40 mm oder 60 mm. Wie aus Fig. 9 zu erkennen ist, sind die Materialbahnen A, B auf einem geneigten Dach 31 angeordnet. Zwischen den Materialbahnen a und b wird eine Schweißdüse 16 positioniert und der Schweißwagen wird in Richtung in die Zeichnungsebene hinein also in Längsrichtung, verschoben.

In Fig. 10 ist ein Ablaufschema eines Schweißverfahrens gem. der Erfindung dargestellt. In der gezeigten Position I wird die Schweißdüse 16 eines Schweißwagens 1 in einem Überlappungsbereich A zwischen zwei parallelen Materialbahnen a und b positioniert. Daraufhin wird der Schweißwagen 1 entlang der gestrichelten Linien in die erste Fahrtrichtung 4 bis zu der Position II verschoben. Dort wird die Schweißdüse 16 aus dem Überlappungsbereich A herausgezogen und in eine Neutral-Position bewegt. Daraufhin wird der Schweißwagen unmittelbar in Querrichtung Q zu einem weiteren Überlappungsabschnitt B transportiert. Bevorzugt handelt es sich bei dem Überlappungsabschnitt B um den unmittelbar benachbarten Überlappungsabschnitt zwischen der Materialbahn b und der abschnittsweise unterhalb der Materialbahn b angeordneten Materialbahn c. Es liegt jedoch auch im Rahmen der Erfindung, den Schweißwagen 1 unmittelbar in Querrichtung Q zu einem weiter beabstandeten Überlappungsabschnitt zu transportieren. In Position III angekommen, wird die Schweißdüse 16 in die zweite Schweißposition S2 relativ zu der Andrückwalze 13 verstellt, woraufhin der Schweißwagen 1 im Betriebszustand zu der Position IV verfahren wird, wobei durch Verwendung des erfindungsgemäßen Schweißwagens 1 sichergestellt ist, dass in jede Fahrtrichtung 4, 5 die jeweils obere Materialbahn a, b nach dem Schweißvorgang beim Verfahren des Schweißwagens 1 an die jeweils darunterliegende Materialbahn b, c angedrückt wird.

Es wird zum besseren Verständnis darauf hingewiesen, dass die erste Fahrtrichtung 4 in Fig. 10 der in den Fig. 1 bis 9 gezeigten zweiten Fahrtrichtung 5 entspricht. Ebenso entspricht die zweite Fahrtrichtung 5 in Fig. 10 der ersten Fahrtrichtung 4 gemäß den Fig. 1 bis 9. Weiterhin sind die zugehörigen Schweißpositionen(S1/S2) seitenverkehrt angeordnet.

## Patentansprüche

1. In zwei einander entgegengesetzte Fahrtrichtungen (4,5) verfahrbarer Schweißwagen (1), mit mindestens einer mindestens eine Schweißdüse (16) aufweisenden Schweißeinrichtung (17) zum Verschweißen zweier überlappender Materialbahnen (a, b; b, c), und mit mindestens einer Andrückeinrichtung (13) zur Druckbeaufschlagung der oberen Materialbahn (a, b) nach dem Schweißvorgang, wobei der Schweißwagen (1) in beide Fahrtrichtungen(4, 5) betreibbar ist, **dadurch gekennzeichnet, dass** die Schweißdüse (16) in jeder Fahrtrichtung (4, 5) vor der Andrückeinrichtung (13) angeordnet oder anordenbar ist.

2. Schweißwagen nach Anspruch 1, **dadurch gekennzeichnet, dass** die Schweißdüse (16) in den Fahrtrichtungen (4, 5), insbesondere zusammen mit der Schweißeinrichtung (17), zwischen zwei, auf gegenüberliegenden Seiten der Andrückeinrichtung (13) liegenden Schweißpositionen (S1, S2) verstellbar ist.

3. Schweißwagen nach einem der vorhergehenden Ansprüche, **dadurch gekennzeichnet, dass** die Schweißdüse (16), insbesondere zusammen mit der Schweißeinrichtung (17), in eine angehobene Neutral-Position verstellbar ist.

4. Schweißwagen nach einem der Ansprüche 2 oder 3, **dadurch gekennzeichnet, dass** zum Verstellen der Schweißdüse (16), insbesondere zusammen mit der Schweißeinrichtung (17), ein Verstellmechanismus (18) vorgesehen ist, mit dem die die Schweißdüse (16) entlang sowie orthogonal zu einer, parallel zu den Fahrtrichtungen (4, 5) angeordnete ersten Achse (19) verstellbar und um die erste Achse (19) oder eine zu der ersten Achse parallele zweite Achse verschwenkbar ist.

5. Schweißwagen nach einem der vorhergehenden Ansprüche, **dadurch gekennzeichnet, dass** die Schweißdüse (16), insbesondere zusammen mit der Schweißeinrichtung (17), in den Fahrtrichtungen (4,5) zwischen zwei beabstandeten Andrückeinrichtungen (13, 13') angeordnet oder anordnenbar ist.

6. Schweißwagen nach einem der vorhergehenden Ansprüche, **dadurch gekennzeichnet, dass** die Andrückeinrichtung (13) mindestens eine auf der oberen Materialbahn (a, b) abrollende Andrückwalze (13) umfasst.

7. Schweißwagen nach einem der vorhergehenden Ansprüche, **dadurch gekennzeichnet, dass** der Schweißwagen (1) einen Antriebsmotor (6) aufweist, der die Andrückwalze (13) antreibend angeordnet ist.

8. Schweißwagen nach Anspruch 7,**dadurch gekennzeichnet, dass** der Antriebsmotor (6) eine drehfest mit der Andrückwalze (13) verbundene Welle (12) antreibend angeordnet ist, auf der mit Abstand zu der Andrückwalze (13) drehfest ein Laufrad (14) sitzt.

9. Schweißwagen nach Anspruch 8, **dadurch gekennzeichnet, dass** mit Abstand in jeder Fahrtrichtung (4, 5) zu der Welle (12) jeweils ein Stützrad (26, 27) angeordnet ist, wobei die beiden Stützräder (26, 27) derart angeordnet sind, dass zumindest während des Schweißbetriebs jeweils nur ein, vorzugsweise dass jeweils in Fahrtrichtung (4, 5) angeordnete, Stützrad (26, 27) Materialbahnkontakt hat.

10. Schweißwagen nach einem der vorhergehenden Ansprüche, dass mindestens ein Sensor zum Messen der Temperatur im Schweißabschnitt und/oder mindestens ein Sensor zum Messen der Umgebungstemperatur sowie eine Anzeigeeinrichtung zur Darstellung der Messergebnisse vorgesehen ist.

11. Schweißwagen nach einem der vorhergehenden Ansprüche, **dadurch gekennzeichnet, dass** mindestens eine Führungseinrichtung, insbesondere ein Führungsrad oder ein Führungslaser, vorgesehen ist.

12. Verfahren zum Verschweißen mehrerer in Längsrichtung parallel zueinander verlaufender Materialbahnen (a, b, c) mit einem Schweißwagen (1), insbesondere mit einem Schweißwagen (1) nach einem der vorhergehenden Ansprüche, wobei mindestens eine erste Materialbahn (c) mindestens eine benachbarte zweite Materialbahn (b) in Querrichtung (Q) in einem sich in Längsrichtung erstreckenden ersten Überlappungsabschnitt (A) überlappt, und wobei die zweite Materialbahn (b) mindestens eine benachbarte dritte Materialbahn (c) in Querrichtung (Q) in einem sich in Längsrichtung ersteckenden zweien Überlappungsabschnitt (B) überlappt, **gekennzeichnet durch** die Schritte:
- Positionierten einer Schweißdüse (16) einer auf dem Schweißwagen (1) angeordneten Schweißeinrichtung (17) in dem ersten Überlappungsabschnitt (A) zwischen der ersten und der zweiten Materialbahn (a, b);
- Verfahren des Schweißwagens (1) in eine erste Längsrichtung (4) entlang des ersten Überlapppungsabschnitts (A) bei eingeschalteter Schweißeinrichtung (17), wobei die erste Materialbahn (a) von mindestens einer Andrückeinrichtung (13) des Schweißwagens (1) nach dem Schweißvorgang beim Verfahren des Schweißwagens (1) druckbeaufschlagt wird;
- Transportierten, insbesondere Verfahren, des Schweißwagens (1) in Querrichtung (Q) zu einem weiteren Überlappungsabschnitt zweier paralleler Materialbahnen, insbesondere zu dem zweiten Überlappungsabschnitt (B) der zweiten und der dritten Materialbahn (b, c);
- Positionieren der Schweißdüse (16) in dem weiteren Überlappungsabschnitt, zwischen den sich überlappenden Materialbahnen;
- Verfahren des Schweißwagens (1) in der der ersten Längsrichtung (4) entgegengesetzten zweiten Längsrichtung (5) entlang des weitern Überlappungsabschnitts bei eingeschalteter Schweißeinrichtung (17), wobei die obere Materialbahn (1) von der Andrückeinrichtung (13) des Schweißwagens (1) nach dem Schweißvorgang beim Verfahren des Schweißwagens (1) druckbeaufschlagt wind.

13. Verfahren nach Anspruch 12, **dadurch gekennzeichnet, dass** die Schweißdüse (1), insbesondere zusammen mit der Schweißeinrichtung (17), nach dem Verfahren des Schweißwagens (1) in die erste Längsrichtung (4), relativ zu der Andrückeinrichtung (13) von einer ersten Schweißposition (S1) in Richtung der zweiten Längsrichtung (5) in die zweite Schweißposition (S2) verstellt wird.

## Claims

1. Welding carriage (1) movable in two mutually opposed directions of travel (4, 5), comprising at least one welding device (17), which has at least one welding nozzle (16), for welding two overlapping webs of material (a, b; b, c) and comprising at least one pressing device (13) for applying pressure to the upper web of material (a, b) after welding, the welding carriage (1) being operable in both directions of travel (4, 5), **characterised in that** in each direction of travel (4, 5), the welding nozzle (16) is arranged or can be arranged in front of the pressing device (13).

2. Welding carriage according to claim 1, **characterised in that** the welding nozzle (16), in particular together with the welding device (17), is adjustable in the directions of travel (4, 5) between two welding positions (S1, S2) located on opposite sides of the pressing device (13).

3. Welding carriage according to any one of the preceding claims, **characterised in that** the welding nozzle (16), in particular together with the welding device (17), is adjustable into a raised neutral position.

4. Welding carriage according to either claim 2 or claim 3, **characterised in that** in order to adjust the welding nozzle (16), in particular together with the welding device (17), an adjusting mechanism (18) is provided with which the welding nozzle (16) can be adjusted both along and orthogonal to a first axis (19) arranged parallel to the directions of travel (4, 5) and can be pivoted about the first axis (19) or a second axis parallel to the first axis.

5. Welding carriage according to any one of the preceding claims, **characterised in that** the welding nozzle (16), in particular together with the welding device (17), can be arranged in the directions of travel (4, 5) between two mutually spaced pressing devices (13, 13').

6. Welding carriage according to any one of the preceding claims, **characterised in that** the pressing device (13) comprises at least one pressing roller (13) which rolls on the upper web of material (a, b).

7. Welding carriage according to any one of the preceding claims, **characterised in that** the welding carriage (1) comprises a drive motor (6) which is arranged to drive the pressing roller (13).

8. Welding carriage according to claim 7, **characterised in that** the drive motor (6) is arranged to drive a shaft (12) which is fixed in rotation with the pressing roller (13) and on which a running wheel (14) fixed in rotation is positioned at a distance from the pressing roller (13).

9. Welding carriage according to claim 8, **characterised in that** a respective support wheel (26, 27) is arranged at a distance from the shaft (12) in each direction of travel (4, 5), the two support wheels (26, 27) being arranged in such a way that at least during welding only one support wheel (26, 27), preferably the one arranged in the respective direction of travel (4, 5), is in contact with the web of material.

10. Welding carriage according to any one of the preceding claims, **characterised in that** at least one sensor for measuring the temperature in a welding portion and/or at least one sensor for measuring the ambient temperature and also a display means for displaying the results of the measurements are provided.

11. Welding carriage according to any one of the preceding claims, **characterised in that** at least one guide means is provided, in particular a guide wheel or a guide laser.

12. Method for welding a plurality of webs of material (a, b, c), extending parallel to one another in the longitudinal direction, by means of a welding carriage (1), in particular by means of a welding carriage (1) according to any one of the preceding claims, at least one first web of material (c) overlapping at least one adjacent second web of material (b) in the transverse direction (Q) in a first overlap portion (A) extending in the longitudinal direction, and the second web of material (b) overlapping at least one adjacent third web of material (c) in the transverse direction (Q) in a second overlap portion (B) extending in the longitudinal direction, **characterised by** the steps of:
- positioning a welding nozzle (16) of a welding device (17) arranged on the welding carriage (1) in the first overlap portion (A) between the first and the second web of material (a, b);
- moving the welding carriage (1) in a first longitudinal direction (4) along the first overlap portion (A) with the welding device (17) switched on, the first web of material (a) having pressure applied to it by at least one pressing device (13) of the welding carriage (1) when the welding carriage (1) is moved, after welding;
- transporting, in particular moving, the welding carriage (1) in the transverse direction (Q) towards a further overlap portion of two parallel webs of material, in particular towards the second overlap portion (B) of the second and the third web of material (b, c);
- positioning the welding nozzle (16) in the further overlap portion between the overlapping webs of material; and
- moving the welding carriage (1) in the second longitudinal direction (5) opposed to the first longitudinal direction (4) along the further overlap portion with the welding device (17) switched on, the upper web of material (1) having pressure applied to it by the pressing device (13) of the welding carriage (1) when the welding carriage (1) is moved, after welding.

13. Method according to claim 12, **characterised in that** the welding nozzle (1), in particular together with the welding device (17), is adjusted relative to the pressing device (13) from a first welding position (S1) in the direction of the second longitudinal direction (5) into the second welding position (S2), following movement of the welding carriage (1) in the first longitudinal direction (4).

## Revendications

1. Chariot de soudage (1), déplaçable dans deux directions de déplacement (4, 5) opposées l'une par rapport à l'autre, avec au moins un dispositif de soudage (17), présentant au moins une buse de soudage (16), pour le soudage de deux bandes de matériau (a, b ; b, c) se chevauchant, et avec au moins un dispositif de pressage (13), pour assurer la sollicitation en pression de la bande de matériau supérieure (a, b) après le processus de soudage, le chariot de soudage (1) étant apte à fonctionner dans les deux directions de déplacement (4, 5), **caractérisé en ce que** la buse de soudage (16) est disposée ou apte à être disposée en amont du dispositif de pressage (13), dans chaque direction de déplacement (4, 5).

2. Chariot de soudage selon la revendication 1, **caractérisé en ce que** la buse de soudage (16) est réglable dans les directions de déplacement (4, 5), en particulier conjointement avec le dispositif de soudage (17), entre deux positions de soudage (S1, S2) situées sur des côtés du dispositif de pressage (13) situés l'un en face de l'autre.

3. Chariot de soudage selon l'une des revendications précédentes, **caractérisé en ce que** la buse de soudage (16) est réglable, en particulier conjointement avec le dispositif de soudage (17), dans une position neutre relevée.

4. Chariot de soudage selon l'une des revendications 2 ou 3, **caractérisé en ce que**, pour le réglage de la buse de soudage (16), en particulier conjointe avec le dispositif de soudage (17), est prévu un mécanisme de réglage (18) avec lequel la buse de soudage (16) est réglable le long d'un premier axe (19), parallèle aux directions de déplacement (4, 5), ainsi que perpendiculairement à ce premier axe, et est apte à pivoter autour du premier axe (19) ou d'un deuxième axe, parallèle au premier axe.

5. Chariot de soudage selon l'une des revendications précédentes, **caractérisé en ce que** la buse de soudage (16) est disposée ou apte à être disposée, en particulier conjointement avec le dispositif de soudage (17), dans les directions de déplacement (4, 5), entre deux dispositifs de pressage (13, 13') espacés l'un de l'autre.

6. Chariot de soudage selon l'une des revendications précédentes, **caractérisé en ce que** le dispositif de pressage (13) comprend au moins un cylindre de pressage (13), roulant sur la bande de matériau supérieure (a, b).

7. Chariot de soudage selon l'une des revendications précédentes, **caractérisé en ce que** le chariot de soudage (1) présente un moteur d'entraînement (6), qui est disposé en entraînement du cylindre de pressage (13).

8. Chariot de soudage selon la revendication 7, **caractérisé en ce que** le moteur d'entraînement (6) est disposé en entraînement d'un arbre (12) solidaire en rotation du cylindre de pressage (13), arbre sur lequel une roue mobile (14) est montée à distance et solidaire en rotation du cylindre de pressage (13).

9. Chariot de soudage selon la revendication 8, **caractérisé en ce que** , dans chaque direction de déplacement (4, 5), une roue d'appui (26, 27) est respectivement montée à distance de l'arbre (12), les deux roues d'appui (26, 27) étant disposées de manière que, au moins pendant le fonctionnement en soudage, une seule roue d'appui (26, 27), disposée de préférence respectivement dans la direction de déplacement (4, 5), soit à chaque fois en contact avec la bande de matériau.

10. Chariot de soudage selon l'une des revendications précédentes, **caractérisé en ce que** sont prévus au moins un capteur pour la mesure de la température dans la partie de soudage et/ou au moins un capteur pour la mesure de la température ambiante, ainsi qu'un dispositif d'indication, pour représenter les résultats de mesure.

11. Chariot de soudage selon l'une des revendications précédentes, **caractérisé en ce qu'**est prévu au moins un dispositif de guidage, en particulier une roue de guidage ou un laser de guidage.

12. Procédé de soudage de plusieurs bandes de matériau (a, b, c) s'étendant parallèlement les unes aux autres dans la direction longitudinale, avec un chariot de soudage (1), en particulier, avec un chariot de soudage (1) selon l'une des revendications précédentes, dans lequel au moins une première bande de matériau (c) chevauche, dans la direction transversale (Q), au moins une deuxième bande de matériau (b) voisine, dans une première partie de chevauchement (A) s'étendant dans la direction longitudinale, et dans lequel la deuxième bande de matériau (b) chevauche, dans la direction transversale (Q), au moins une troisième bande de matériau (c) voisine dans une deuxième partie de chevauchement (B) s'étendant dans la direction longitudinale, **caractérisé par** les étapes de :
- mise en position d'une buse de soudage (16) d'un dispositif de soudage (17) disposé sur le chariot de soudage (1), dans la première partie de chevauchement (A), entre la première et la deuxième bandes de matériau (a, b) ;
- déplacement du chariot de soudage (1) dans une première direction longitudinale (4), le long de la première partie de chevauchement (A), quand le dispositif de soudage (17) est mis en service, la première bande de matériau (a) étant sollicitée en pression par au moins un dispositif de pressage (13) du chariot de soudage (1), après le processus de soudage, lors du déplacement du chariot de soudage (1) ;
- transport, en particulier déplacement, du chariot de soudage (1) en direction transversale (Q) par rapport à une autre partie de chevauchement de deux bandes de matériau parallèles, en particulier dans la deuxième partie de chevauchement (B) de la deuxième et de la troisième bandes de matériau (b, c) ;
- mise en position de la buse de soudage (16) dans l'autre partie de chevauchement, entre les bandes de matériau en chevauchement,
- déplacement du chariot de soudage (1) dans la deuxième direction longitudinale (5) opposée à la première direction longitudinale (4), le long de l'autre partie de chevauchement, lorsque le dispositif de soudage (17) est mis en service, la bande de matériau supérieure (1) étant sollicitée en pression par le dispositif de pressage (13) du chariot de soudage (1), après le processus de soudage, lors du déplacement du chariot de soudage (1).

13. Procédé selon la revendication 12, **caractérisé en ce que** la buse de soudage (16), en particulier conjointement avec le dispositif de soudage (17), est réglée dans la direction de la deuxième direction de déplacement (5) d'une première position de soudage (S1) à la deuxième position de soudage (S2), après le déplacement du chariot de soudage (1) dans la première direction longitudinale (4) par rapport au dispositif de pressage (13).
